# EUROPÄISCHE PATENTSCHRIFT

(11) **EP 1 388 238 B1**
(45) Veröffentlichungstag und Bekanntmachung des Hinweises auf die Patenterteilung: **05.03.2008**
(21) Anmeldenummer: 01997926.9
(22) Anmeldetag: 16.11.2001
(51) Int. Cl.: H04L 12/64

(54) **SYSTEM UND VERFAHREN ZUR PARALLELEN ÜBERTRAGUNG VON ECHTZEITKRITISCHEN UND NICHT ECHTZEITKRITISCHEN DATEN ÜBER SCHALTBARE DATENNETZE, INSBESONDERE ETHERNET**
SYSTEM AND METHOD FOR THE PARALLEL TRANSMISSION OF REAL-TIME CRITICAL AND NON REAL-TIME CRITICAL DATA VIA SWITCHED DATA NETWORKS, ESPECIALLY ETHERNET
SYSTEME ET PROCEDE DE TRANSMISSION PARALLELE DE DONNEES CRITIQUES EN TEMPS REEL ET DE DONNEES NON CRITIQUES EN TEMPS REEL SUR DES RESEAUX DE DONNEES COMMUTABLES, NOTAMMENT ETHERNET

(30) Priorität: 24.11.2000 DE 10058524
(43) Veröffentlichungstag der Anmeldung: 11.02.2004
(73) Patentinhaber: SIEMENS AKTIENGESELLSCHAFT, 80333 München (DE)
(72) Erfinder: KRAUSE, Karl-Heinz, 90475 Nürnberg (DE)
(86) Internationale Anmeldenummer: PCT/DE2001/004322
(87) Internationale Veröffentlichungsnummer: WO 2002/043336

(56) Entgegenhaltungen:
- EP-A- 0 510 290
- US-A- 5 654 969

## Beschreibung

Die Erfindung bezieht sich auf ein System und Verfahren zur parallelen Übertragung von echtzeitkritischen und nicht echtzeitkritischen Daten über schaltbare Datennetze, insbesondere Ethernet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein. Ist der Teilnehmer mit einer Koppeleinheit integriert, so kann die Koppeleinheit auch nur mit einer anderen Koppeleinheit oder einem anderen Teilnehmer verbunden sein, also ein Endgerät darstellen. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt-Verbindungen, d.h. ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Aus der US 5,654,969 ist eine Anordnung in einem digitalen Kommunikationsnetzwerk zur Übertragung synchron übertragbarer erster Informationen, beispielsweise Sprache oder Video, und asynchron übertragbarer zweiter Informationen, beispielsweise Daten, bekannt.

Aus dem Aufsatz "Fixed- and Movable-Boundary Channel-Access Schemes for Integrated Voice/Data Wireless Networks" von Jeffrey E. Wieselthier, IEEE-Transactions on Communications, Volume 43, No. 1, January 1995, page 64 - 74, ist ein Kanalzugangsverfahren für Funknetzwerke bekannt, die eine quasi gleichzeitige Sprach- und Datenübertragung erlauben. Dabei wird auf die unterschiedlichen Anforderungen Rücksicht genommen, welche eine Sprach- und Datenübertragung an Übertragungsverzögerung und Fehlerrate stellen. Sprachdaten werden wie echtzeitkritische Daten behandelt und andere Daten wie nicht echtzeitkritische. Das bekannte Funkdatennetz ist zwischen wenigstens zwei Teilnehmern, insbesondere einem Sender und einem Empfänger, aufgebaut, wobei die Daten in wenigstens einem Übertragungszyklus mit einstellbarer Zeitdauer übertragen werden. Jeder Übertragungszyklus ist in wenigstens einen ersten Bereich zur Übertragung von echtzeitkritischen Daten, nämlich der Sprachdaten, und wenigstens einen zweiten Bereich zur Übertragung von nicht echtzeitkritischen Daten unterteilt. Für nicht echtzeitkritische Daten wird eine Pufferung zugelassen, während diese bei echtzeitkritischen Daten nicht erlaubt ist, da diese in einem kontinuierlichen Strom nahezu in Echtzeit übertragen werden müssen. Wenn die Kanalkapazität ausgelastet ist, kann es jedoch auch vorkommen, dass Sprachdaten, beispielsweise bei einem neuen Verbindungsversuch, geblockt werden und damit verlorengehen.

Aufgabe der Erfindung ist es, ein System und ein Verfahren zur Übertragung von Daten über schaltbare Datennetze, insbesondere Ethernet, anzugeben, das einen Mischbetrieb von echtzeitkritischer und nicht echtzeitkritischer, insbesondere inter- bzw. intranetbasierte Datenkommunikation, im selben Datennetz ermöglicht.

Diese Aufgabe wird durch ein Verfahren zur Übertragung von Daten über schaltbare Datennetze, insbesondere Ethernet im Bereich industrieller Anlagen, gelöst, bei dem echtzeitkritische und nicht echtzeitkritische Daten übertragen werden, wobei das schaltbare Datennetz zwischen wenigstens zwei Teilnehmern, insbesondere einem Sender und einem Empfänger aufgebaut ist, wobei die Daten in wenigstens einem Übertragungszyklus mit einstellbarer Zeitdauer übertragen werden, jeder Übertragungszyklus in wenigstens einen ersten Bereich zur Übertragung von echtzeitkritischen Daten zur Echtzeitsteuerung und wenigstens einen zweiten Bereich zur Übertragung von nicht echtzeitkritischen Daten unterteilt ist.

Diese Aufgabe wird durch ein System zur Übertragung von Daten über schaltbare Datennetze, insbesondere Ethernet im Bereich industrieller Anlagen, mit mindestens einer mit einem Datennetz koppelbaren Datenverarbeitungsvorrichtung gelöst, das echtzeitkritische und nicht echtzeitkritische Daten überträgt, wobei das schaltbare Datennetz zwischen wenigstens zwei Teilnehmern, insbesondere einem Sender und einem Empfänger aufgebaut ist, wobei das System Mittel zur Übertragung von Daten in wenigstens einem Übertragungszyklus mit einstellbarer Zeitdauer aufweist, jeder Übertragungszyklus in wenigstens einen ersten Bereich zur Übertragung von echtzeitkritischen Daten zur Echtzeitsteuerung und wenigstens einen zweiten Bereich zur Übertragung von nicht echtzeitkritischen Daten unterteilt ist.

Der Erfindung liegt die Erkenntnis zugrunde, dass eine offene internetbasierte Kommunikation spontane Kommunikation ist, d.h., dass sowohl Zeitpunkt solcherart Kommunikation als auch die anfallende Datenmenge, die dabei zu transferieren ist, nicht vorher bestimmbar ist. Dadurch sind Kollisionen auf den Übertragungsleitungen bei Bussystemen bzw. in den Koppeleinheiten bei schaltbaren Hochgeschwindigkeitsnetzen, insbesondere Fast Ethernet oder Switched Ethernet, nicht auszuschlie-ßen. Um die Vorteile der Internetkommunikationstechnologie auch bei der Echtzeitkommunikation in schaltbaren Datennetzen im Bereich der Automatisierungstechnik, insbesondere der Antriebstechnik nutzen zu können, ist ein Mischbetrieb von Echtzeitkommunikation mit sonstiger spontaner, nicht echtzeitkritischer Kommunikation, insbesondere Internetkommunikation wünschenswert. Dies wird dadurch möglich, dass die Echtzeitkommunikation, die in den hier betrachteten Anwendungsgebieten vorwiegend zyklisch auftritt und somit im Voraus planbar ist, von der im Gegensatz dazu nicht planbaren, nicht echtzeitkritischen Kommunikation, insbesondere der offenen, internetbasierten Kommunikation strikt getrennt wird.

Die Kommunikation zwischen den Teilnehmern erfolgt dabei in Übertragungszyklen, wobei jeder Übertragungszyklus in wenigstens einen ersten Bereich zur Übertragung von echtzeitkritischen Daten zur Echtzeitsteuerung, beispielsweise der dafür vorgesehenen industriellen Anlagen und wenigstens einen zweiten Bereich zur Übertragung von nicht echtzeitkritischen Daten, beispielsweise bei der offenen, internetfähigen Kommunikation unterteilt ist. Eine besonders vorteilhafte Ausgestaltung der Erfindung ist dabei dadurch gekennzeichnet, dass jedem Teilnehmer eine Koppeleinheit zugeordnet ist, die zum Senden und/oder zum Empfangen und/oder zur Weiterleitung der zu übertragenden Daten vorgesehen ist.

Eine außerordentlich vorteilhafte Ausgestaltung der Erfindung ist dadurch gekennzeichnet, dass alle Teilnehmer und Koppeleinheiten des schaltbaren Datennetzes durch Zeitsynchronisation untereinander stets eine gemeinsame synchrone Zeitbasis aufweisen. Dies ist Voraussetzung für eine Trennung der planbaren Echtzeitkommunikation von der nicht planbaren, nicht echtzeitkritischen Kommunikation. Die Trennung der planbaren Echtzeitkommunikation und der nicht planbaren, nicht echtzeitkritischen Kommunikation wird durch Anwendung des Verfahrens zur Zeitsynchronisation gemäß der nicht vorveröffentlichten Anmeldung DE 10004425.5 gewährleistet. Durch permanente Anwendung dieses Verfahrens auch im laufenden Betrieb eines verteilten Automatisierungssystems sind alle Teilnehmer und Koppeleinheiten des schaltbaren Datennetzes stets auf eine gemeinsame Zeitbasis synchronisiert, was infolgedessen gleicher Startpunkt und gleiche Länge jedes Übertragungszyklus für alle Teilnehmer und Koppeleinheiten bedeutet. Da alle echtzeitkritischen Datenübertragungen durch den zyklischen Betrieb vor der eigentlichen Datenübertragung bekannt sind und deshalb im Voraus geplant werden können, ist sichergestellt, dass für alle Teilnehmer und Koppeleinheiten die Echtzeitkommunikation so gesteuert werden kann, dass keine Störungen, beispielsweise Kollisionen, bei der Datenübertragung der echtzeitkritischen Datentelegramme selbst auftreten und alle geplanten kritischen Datentransferzeitpunkte exakt eingehalten werden.

Eine weitere besonders vorteilhafte Ausgestaltung der Erfindung ist dadurch gekennzeichnet, dass alle nicht echtzeitkritischen Daten, die während des, für die echtzeitkritische Kommunikation vorgesehenen Bereichs eines Übertragungszyklus übertragen werden sollen, von der jeweiligen Koppeleinheit zwischengespeichert und während des, für die nicht echtzeitkritische Kommunikation vorgesehenen Bereichs dieses oder eines folgenden Übertragungszyklus übertragen werden, d.h. eine im ersten Bereich eines Übertragungszyklus, der für die Echtzeitkommunikation reserviert ist, möglicherweise auftretende, nicht geplante Internetkommunikation wird in den zweiten Bereich des Übertragungszyklus, der für die spontane, nicht echtzeitkritische Kommunikation vorbehalten ist, verschoben, wodurch Störungen der Echtzeitkommunikation vollständig vermieden werden. Die entsprechenden Daten der spontanen, nicht echtzeitkritischen Kommunikation werden dabei von der jeweils betroffenen Koppeleinheit zwischengespeichert und nach Ablauf des Bereichs für die Echtzeitkommunikation erst im zweiten Bereich des Übertragungszyklus, der für die spontane, nicht echtzeitkritische Kommunikation vorbehalten ist, gesendet. Dieser zweite Bereich, d.h. die gesamte Zeitdauer bis zum Ende des Übertragungszyklus, steht allen Teilnehmern für die nicht planbare, nicht echtzeitkritische Kommunikation, insbesondere Internetkommunikation zur Verfügung, ebenfalls ohne die Echtzeitkommunikation zu beeinflussen, da diese zeitlich getrennt durchgeführt wird.

Kollisionen mit den echtzeitkritischen Datentelegrammen in den Koppeleinheiten können dadurch vermieden werden, dass alle nicht echtzeitkritischen Daten, die während des, für die Übertragung der nicht echtzeitkritischen Daten vorgesehenen Bereichs eines Übertragungszyklus nicht übertragen werden können, von der jeweiligen Koppeleinheit zwischengespeichert und während des, für die Übertragung der nicht echtzeitkritischen Daten vorgesehenen Bereichs eines späteren Übertragungszyklus übertragen werden.

Eine weitere vorteilhafte Ausgestaltung der Erfindung ist dadurch gekennzeichnet, dass die Zeitdauer des Bereichs zur Übertragung von nicht echtzeitkritischen Daten innerhalb eines Übertragungszyklus automatisch durch die Zeitdauer des Bereichs zur Übertragung von echtzeitkritischen Daten festgelegt wird. Vorteil dieser Anordnung ist, dass jeweils nur die notwendige Übertragungszeit für den echtzeitkritischen Datenverkehr verwendet wird und die restliche Zeit automatisch für die nicht echtzeitkritische Kommunikation, beispielsweise für die nicht planbare Internetkommunikation bzw. andere nicht echtzeitkritische Anwendungen zur Verfügung steht. Besonders vorteilhaft ist, dass die Zeitdauer des Bereichs zur Übertragung von echtzeitkritischen Daten innerhalb eines Übertragungszyklus jeweils durch die verbindungsspezifisch zu übertragenden Daten bestimmt wird, d.h., die Zeitdauer der beiden Bereiche wird für jede einzelne Datenverbindung durch die jeweils notwendige Datenmenge der zu übertragenden echtzeitkritischen Daten bestimmt, wodurch die Aufteilung der beiden Bereiche und damit die Zeit, die zur nicht echtzeitkritischen Kommunikation zur Verfügung steht, für jede einzelne Datenverbindung zwischen zwei Koppeleinheiten für jeden Übertragungszyklus optimiert ist.

Eine weitere vorteilhafte Ausgestaltung der Erfindung ist dadurch gekennzeichnet, dass die Zeitdauer eines Übertragungszyklus wenigstens einmal vor der jeweiligen Durchführung der Datenübertragung festgelegt wird. Dies hat den Vorteil, dass dadurch bei jedem Start einer neuen, im Voraus geplanten Datenübertragung die Zeitdauer eines Übertragungszyklus auf die jeweiligen Erfordernisse zur Echtzeitkommunikation bzw. zur offenen, internetfähigen Kommunikation abgestimmt werden kann. Selbstverständlich ist es auch möglich, dass die Zeitdauer eines Übertragungszyklus und/oder die Zeitdauer des Bereichs zur Übertragung von echtzeitkritischen Daten eines Übertragungszyklus je nach Erfordernis verändert werden kann, beispielsweise zu vorher geplanten, festen Zeitpunkten und/oder nach einer geplanten Anzahl von Übertragungszyklen, vorteilhafterweise vor Beginn eines Übertragungszyklus durch Umschalten auf andere geplante, echtzeitkritische Übertragungszyklen. Vorteilhafterweise liegt die Zeitdauer eines Übertragungszyklus je nach Anwendungszweck zwischen einer Mikrosekunde und zehn Sekunden.

Eine weitere überaus vorteilhafte Ausgestaltung der Erfindung ist dadurch gekennzeichnet, dass Neuplanungen der Echtzeitkommunikation jederzeit im laufenden Betrieb eines Automatisierungssystems durchgeführt werden können, wodurch eine flexible Anpassung der Echtzeitsteuerung an sich kurzfristig ändernde Randbedingungen gewährleistet ist. Dadurch ist ebenfalls eine Änderung der Zeitdauer eines Übertragungszyklus möglich.

Eine weitere vorteilhafte Ausgestaltung der Erfindung ist dadurch gekennzeichnet, dass ein Teil des für die Übertragung der echtzeitkritischen Daten vorgesehenen Bereichs des Übertragungszyklus für die Übertragung von Daten zur Organisation der Datenübertragung vorgesehen ist. Von besonderem Vorteil hat sich dabei erwiesen, dass die Datentelegramme zur Organisation der Datenübertragung am Anfang des Bereichs zur Übertragung echtzeitkritischer Daten des Übertragungszyklus übertragen werden. Daten zur Organisation der Datenübertragung sind dabei beispielsweise Daten zur Zeitsynchronisation der Teilnehmer und Koppeleinheiten des Datennetzes, Daten zur Topologieerkennung des Netzwerks, etc.

Eine weitere vorteilhafte Ausgestaltung der Erfindung ist dadurch gekennzeichnet, dass für alle zu übertragenden, echtzeitkritischen Datentelegramme Sende- und Empfangszeitpunkt bei Sender und/oder Empfänger und in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt sind, d.h. es ist in einer Koppeleinheit vermerkt, wann und an welchen Ausgangsport ein zum Zeitpunkt X ankommendes echtzeitkritisches Datentelegramm weiter gesendet werden soll.

Eine weitere überaus vorteilhafte Ausgestaltung der Erfindung ist dadurch gekennzeichnet, dass die Weiterleitungszeitpunkte so geplant sind, dass jedes echtzeitkritische Datentelegramm spätestens zum Weiterleitungszeitpunkt oder früher bei der entsprechenden Koppeleinheit ankommt, es aber auf jeden Fall erst zum Weiterleitungszeitpunkt weitergesendet wird. Damit ist das Problem von Zeitunschärfen, das sich insbesondere bei langen Übertragungsketten bemerkbar macht, eliminiert. Dadurch können die echtzeitkritischen Datentelegramme unmittelbar, ohne zeitlichen Zwischenraum gesendet bzw. weitergeleitet werden, d.h. eine schlechtere Nutzung der Bandbreite bei Echtzeitdatenpaketen wird vermieden. Selbstverständlich ist es aber auch möglich bei Bedarf Sendepausen zwischen der Übertragung der einzelnen Datenpakete einzubauen.

Ein weiterer Vorteil der zeitbasierten Weiterleitung ist, dass die Zielfindung in der Koppeleinheit nicht mehr adressbasiert ist, weil von vornherein klar ist, an welchen Port weitergesendet werden soll. Damit ist die optimale Nutzung aller vorhandenen Verbindungsstrecken innerhalb des schaltbaren Datennetzes möglich. Redundante Verbindungsstrecken des schaltbaren Datennetzes, die für die adressbasierte Durchschaltung der nicht echtzeitkritischen Kommunikation nicht benutzt werden dürfen, weil es andernfalls zu Zirkularitäten von Datenpaketen kommen würde, können aber im Voraus für die Planung der Weiterleitungsstrecken berücksichtigt und somit für die Echtzeitkommunikation benutzt werden. Dadurch ist die Realisierung von redundanten Netzwerktopologien, z.B. Ringe für fehlertolerante Echtzeitsysteme, möglich. Datenpakete können redundant auf disjunkten Pfaden gesendet werden, Zirkularitäten von Datenpaketen treten nicht auf. Ein weiterer Vorteil der vorausgeplanten Weiterleitung ist, dass die Überwachung jeder Teilstrecke dadurch quittungslos möglich und eine Fehlerdiagnose damit einfach durchführbar ist.

Eine weitere, außerordentlich vorteilhafte Ausgestaltung der Erfindung ist dadurch gekennzeichnet, dass wenigstens ein beliebiger Teilnehmer, insbesondere ein Teilnehmer mit der Fähigkeit zur offenen, internetfähigen Kommunikation, mit oder ohne zugeordnete Koppeleinheit, zu einem schaltbaren Datennetz hinzugefügt werden kann und dabei sichergestellt ist, dass kritische Datentransfers zum gewünschten Zeitpunkt erfolgreich durchgeführt werden, auch wenn der beliebige Teilnehmer eine nicht echtzeitkritische Kommunikation, insbesondere Internetkommunikation parallel zu einer echtzeitkritischen Kommunikation durchführt.

Eine weitere, besonders vorteilhafte Ausgestaltung der Erfindung ist dadurch gekennzeichnet, dass eine Koppeleinheit in einen Teilnehmer integriert ist. Dadurch ergibt sich ein außerordentlicher Kostenvorteil gegenüber den, bisher immer als selbständige Bausteine realisierten Koppeleinheiten, auch Switches genannt.

Eine weitere vorteilhafte Ausgestaltung der Erfindung ist dadurch gekennzeichnet, dass eine Koppeleinheit zwei getrennte Zugänge zum jeweiligen Teilnehmer aufweist, wobei ein Zugang für den Austausch von echtzeitkritischen Daten und der andere Zugang für den Austausch von nicht echtzeitkritischen Daten vorgesehen ist. Dies hat den Vorteil, dass echtzeitkritische und nicht echtzeitkritische Daten getrennt verarbeitet werden. Der Zugang für die nicht echtzeitkritischen Daten entspricht der handelsüblichen Schnittstelle eines regulären Ethernet-Kontrollers wodurch die bisher existierende Software, insbesondere Treiber, ohne Einschränkung verwendbar ist. Dasselbe gilt für die bisher existierende Software für ein nicht echtzeitfähiges Datennetz.
Im folgenden wird die Erfindung anhand der in den Figuren dargestellten Ausführungsbeispiele näher beschrieben und erläutert.

### Es zeigen:

- FIG 1: eine schematische Darstellung eines Ausführungsbeispiels für ein verteiltes Automatisierungssystems,
- FIG 2: den prinzipiellen Aufbau eines Übertragungszyklus,
- FIG 3: die prinzipielle Arbeitsweise in einem geschalteten Netzwerk und
- FIG 4: eine schematische Darstellung der Schnittstellen zwischen einem lokalen Teilnehmer und einer Koppeleinheit.

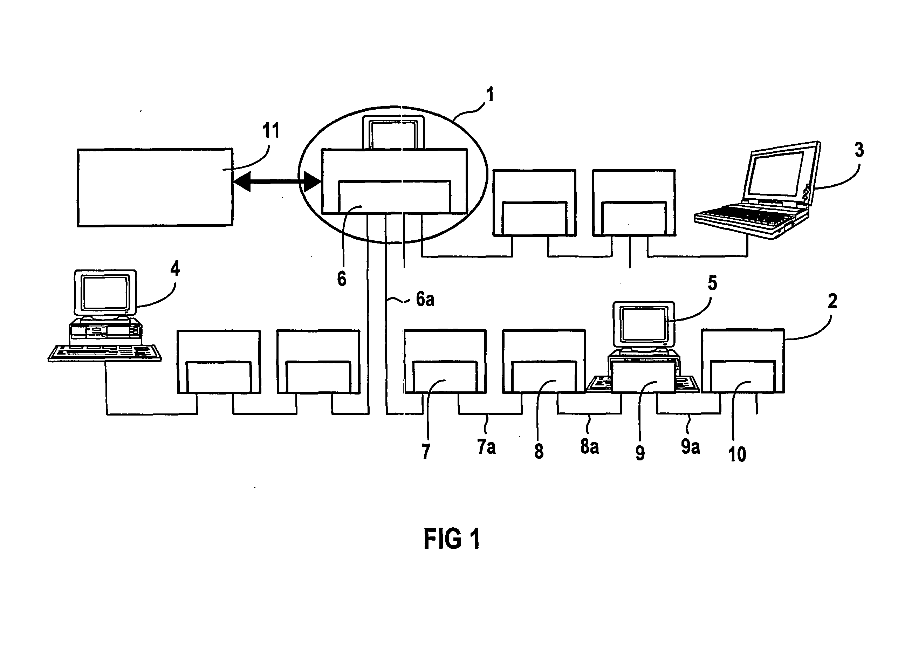

Figur 1 zeigt eine schematische Darstellung eines Ausführungsbeispiels für ein verteiltes Automatisierungssystems, wobei aus Gründen der übersichtlichen Darstellung als Teil der Erfindung jeweils die Koppeleinheit bereits in den betreffenden Teilnehmer integriert ist. Der bisherige Stand der Technik sieht im Gegensatz dazu jeden der hier bereits in den betreffenden lokalen Teilnehmer integrierten Koppeleinheiten als eigenes Gerät, das jeweils zwischen zwei Teilnehmer geschaltet ist. Die Integration der jeweiligen Koppeleinheit in einen Teilnehmer ist kostengünstiger und wartungsfreundlicher.

Das gezeigte Automatisierungssystem besteht aus mehreren Teilnehmern, die gleichzeitig sowohl als Sender als auch als Empfänger ausgeprägt sein können, beispielsweise aus einem Steuerungsrechner 1, mehreren Antrieben, bei denen aus Gründen der übersichtlichen Darstellung nur der Antrieb 2 bezeichnet ist, sowie weiteren Rechnern 3, 4, 5, die mittels Verbindungskabel, insbesondere Ethernetkabel, bei denen aus Gründen der übersichtlichen Darstellung nur die Verbindungen 6a, 7a, 8a, 9a bezeichnet sind, zu einem schaltbaren Datennetz, insbesondere Ethernet, miteinander verbunden sind. Die für die Topologie eines Ethernet typischen Koppeleinheiten, bei denen aus Gründen der übersichtlichen Darstellung nur die Koppeleinheiten 6, 7, 8, 9, 10 bezeichnet sind, sind bei dieser Darstellung bereits in die jeweiligen Teilnehmer integriert. Die Koppeleinheiten dienen zum Senden und/oder zum Empfangen und/oder zur Weiterleitung der zu übertragenden Daten.

Der Steuerungsrechner 1 ist beispielsweise zusätzlich an ein firmeninternes Kommunikationsnetz beispielsweise Intranet 11 und/oder das weltweite Kommunikationsnetz Internet 11 angeschlossen. Vom Steuerungsrechner 1 werden echtzeitkritische Daten beispielsweise zur Steuerung von Antrieb 2 über die Verbindungen 6a, 7a, 8a, 9a gesendet. Diese echtzeitkritischen Daten müssen genau zum Zeitpunkt X von Antrieb 2 verarbeitet werden, da sonst unerwünschte Auswirkungen, wie z.B. verspäteter Anlauf des Antriebs 2, etc., eintreten, die die Automatisierungsanlage in ihrer Funktionsweise stören. Die jeweilige Weiterleitung der echtzeitkritischen Daten erfolgt durch die Koppeleinheiten 6, 7, 8, 9 bis zur Koppeleinheit 10, die sie an den Empfänger Antrieb 2 übergibt, von dem die Daten zum Zeitpunkt X verarbeitet werden. Im bisherigen Stand der Technik kann ein erfolgreicher echtzeitkritischer Datenverkehr der genannten Art gewährleistet werden, wenn darüber hinaus zur selben Zeit keine sonstige beliebige Kommunikation, beispielsweise Internetkommunikation durch Rechner 5, stattfindet. In diesem Fall, Internetkommunikation zur selben Zeit durch Rechner 5, fordert Rechner 5 beispielsweise eine Internetseite an. Diese nicht echtzeitkritischen Daten werden über die Verbindungen 8a, 7a, 6a mittels der Koppeleinheiten 9, 8 und 7 an die Koppeleinheit 6 weitergeleitet, welche die Daten an den Rechner 1 übergibt, der schließlich die entsprechende Anfrage an das Internet 11 absetzt und die Antwort über dieselben Verbindungen bzw. Koppeleinheiten in umgekehrter Reihenfolge an Rechner 5 zurücksendet. Die Antwort benutzt damit den gleichen Weg wie die echtzeitkritische Kommunikation. Es können damit Wartesituation in den beteiligten Koppeleinheiten auftreten und die echtzeitkritischen Daten können nicht mehr zeitgerecht beim Antrieb 2 ankommen. Ein fehlerfreier Echtzeitbetrieb kann deshalb mit dem bisherigen Stand der Technik nicht mehr garantiert werden. Die Anwendung der offenbarten Erfindung ermöglicht dagegen parallel zur Echtzeitkommunikation eine beliebige, nicht echtzeitkritische Kommunikation im gleichen Datennetz, ohne Störung der Echtzeitkommunikation. Dies ist durch den Anschluss der Rechner 3 und 4 angedeutet, bei denen keine Koppeleinheit integriert ist und die mittels direktem EthernetAnschluss in das dargestellte Automatisierungssystem integriert sind. Die Rechner 3 und 4 nehmen nicht an der Echtzeitkommunikation, sondern nur an der spontanen, internetfähigen, nicht echtzeitkritischen Kommunikation teil, ohne die Echtzeitkommunikation zu stören.

Der Erfindung liegt die Idee zugrunde, dass echtzeitkritische und nicht echtzeitkritische Kommunikation in schaltbaren Datennetzen so voneinander getrennt wird, dass die nicht echtzeitkritische Kommunikation keinen störenden Einfluß auf die echtzeitkritische Kommunikation nimmt. Voraussetzung für diese Trennung ist einerseits, dass alle Teilnehmer und Koppeleinheiten des schaltbaren Datennetzes durch Zeitsynchronisation untereinander stets eine gemeinsame synchrone Zeitbasis aufweisen. Dies wird durch permanente Anwendung des Verfahrens zur Zeitsynchronisation gemäß der nicht vorveröffentlichten Anmeldung DE 10004425.5 auch im laufenden Betrieb eines verteilten Automatisierungssystems gewährleistet. Die zweite Voraussetzung für die Trennung ist die Planbarkeit der echtzeitkritischen Kommunikation, was dadurch gegeben ist, dass die Echtzeitkommunikation in den hier betrachteten Anwendungsgebieten insbesondere der Antriebstechnik zyklisch auftritt, d.h. eine Datenübertragung in einem oder mehreren Übertragungszyklen stattfindet.

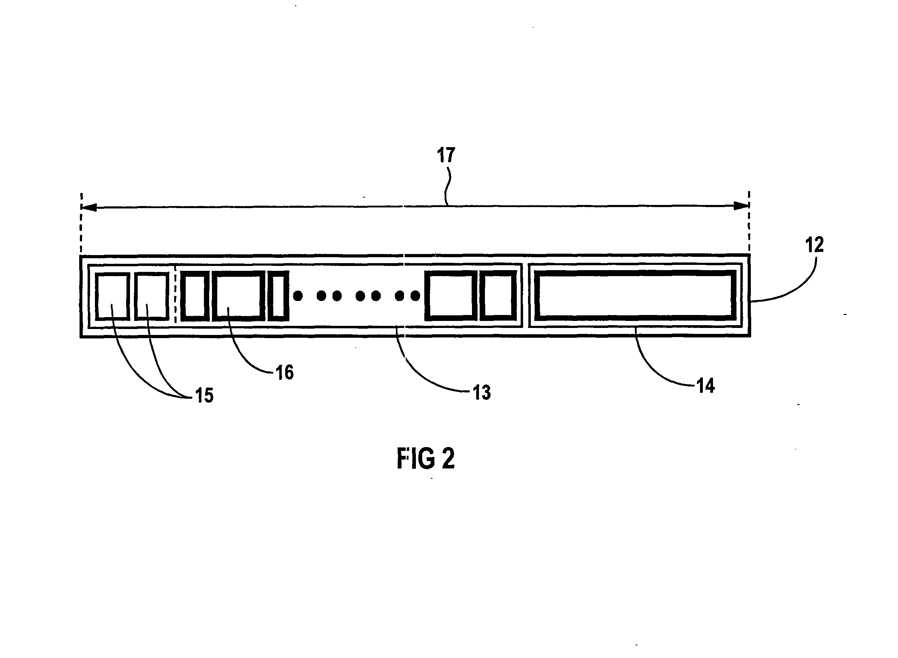

In Figur 2 ist die Ausprägung eines prinzipiellen Aufbaus eines Übertragungszyklus der in zwei Bereiche aufgeteilt ist, beispielhaft dargestellt. Ein Übertragungszyklus 12 ist in einen ersten Bereich 13, der zur Übertragung echtzeitkritischer Daten vorgesehen ist, und einen zweiten Bereich 14, der zur Übertragung nicht echtzeitkritischer Daten vorgesehen ist, aufgeteilt. Die Länge des dargestellten Übertragungszyklus 12 symbolisiert dessen zeitliche Dauer 17, die vorteilhafterweise je nach Anwendungszweck zwischen einer Mikrosekunde und zehn Sekunden beträgt. Die Zeitdauer 17 eines Übertragungszyklus 12 ist veränderbar, wird aber vor dem Zeitpunkt der Datenübertragung, beispielsweise durch den Steuerungsrechner 1 wenigstens einmal festgelegt und ist für alle Teilnehmer und Koppeleinheiten des schaltbaren Datennetzes jeweils gleich lang. Die Zeitdauer 17 eines Übertragungszyklus 12 und/oder die Zeitdauer des ersten Bereichs 13, der zur Übertragung von echtzeitkritischen Daten vorgesehen ist, kann jederzeit, beispielsweise zu vorher geplanten, festen Zeitpunkten und/oder nach einer geplanten Anzahl von Übertragungszyklen, vorteilhafterweise vor Beginn eines Übertragungszyklus 12 verändert werden, indem der Steuerungsrechner 1 beispielsweise auf andere geplante, echtzeitkritische Übertragungszyklen umschaltet. Darüber hinaus kann der Steuerungsrechner 1 jederzeit im laufenden Betrieb eines Automatisierungssystems je nach Erfordernis Neuplanungen der Echtzeitkommunikation durchführen, wodurch ebenfalls die Zeitdauer 17 eines Übertragungszyklus 12 verändert werden kann. Die absolute Zeitdauer 17 eines Übertragungszyklus 12 ist ein Maß für den zeitlichen Anteil, bzw. die Bandbreite der nicht echtzeitkritischen Kommunikation während eines Übertragungszyklus 12, also die Zeit, die für die nicht echtzeitkritische Kommunikation zur Verfügung steht. So hat die nicht echtzeitkritische Kommunikation beispielsweise bei einer Zeitdauer 17 eines Übertragungszyklus 12 von 500us eine Bandbreite von 30%, bei 10ms eine Bandbreite von 97%. Im ersten Bereich 13, der zur Übertragung echtzeitkritischer Daten vorgesehen ist, ist vor dem Senden der eigentlichen echtzeitkritischen Datentelegramme, von denen der Übersichtlichkeit wegen nur das Datentelegramm 16 bezeichnet ist, eine gewisse Zeitdauer zum Senden von Datentelegrammen zur Organisation der Datenübertragung 15 reserviert. Die Datentelegramme zur Organisation der Datenübertragung 15 enthalten beispielsweise Daten zur Zeitsynchronisation der Teilnehmer und Koppeleinheiten des Datennetzes und/oder Daten zur Topologieerkennung des Netzwerks. Nachdem diese Datentelegramme gesendet wurden, werden die echtzeitkritischen Datentelegramme, respektive Datentelegramm 16, gesendet. Da die Echtzeitkommunikation durch den zyklischen Betrieb im Voraus planbar ist, sind für alle zu übertragenden, echtzeitkritischen Datentelegramme eines Übertragungszyklus 12, respektive Datentelegramm 16, die Sendezeitpunkte bzw. die Zeitpunkte für die Weiterleitung der echtzeitkritischen Datentelegramme vor Beginn der Datenübertragung bekannt, d.h. die Zeitdauer des Bereichs 14 zur Übertragung von nicht echtzeitkritischen Daten ist automatisch durch die Zeitdauer des Bereichs 13 zur Übertragung von echtzeitkritischen Daten festgelegt. Vorteil dieser Anordnung ist, dass jeweils nur die notwendige Übertragungszeit für den echtzeitkritischen Datenverkehr verwendet wird und nach dessen Beendigung die restliche Zeit automatisch für die nicht echtzeitkritische Kommunikation, beispielsweise für die nicht planbare Internetkommunikation bzw. andere nicht echtzeitkritische Anwendungen zur Verfügung steht. Besonders vorteilhaft ist, dass die Zeitdauer des Bereichs 13 zur Übertragung von echtzeitkritischen Daten jeweils durch die verbindungsspezifisch zu übertragenden Daten bestimmt wird, d.h., die Zeitdauer der beiden Bereiche wird für jede einzelne Datenverbindung durch die jeweils notwendige Datenmenge der zu übertragenden echtzeitkritischen Daten bestimmt, wodurch die zeitliche Aufteilung von Bereich 13 und Bereich 14 für jede einzelne Datenverbindung für jeden Übertragungszyklus 12 verschieden sein kann. Es wird jeweils nur die notwendige Übertragungszeit für den echtzeitkritischen Datenverkehr verwendet und die restliche Zeit eines Übertragungszyklus 12 steht automatisch für die nicht echtzeitkritische Kommunikation, beispielsweise für die nicht planbare Internetkommunikation bzw. andere nicht echtzeitkritische Anwendungen für alle Teilnehmer des schaltbaren Datennetzes zur Verfügung. Da die Echtzeitkommunikation im Voraus entsprechend so geplant ist, dass das Ankommen der echtzeitkritischen Datentelegramme in den entsprechenden Koppeleinheiten so geplant ist, dass die betrachteten, echtzeitkritischen Datentelegramme, beispielsweise Datentelegramm 16, spätestens zum Weiterleitungszeitpunkt oder früher bei den entsprechenden Koppeleinheiten ankommen, können die echtzeitkritischen Datentelegramme, respektive Datentelegramm 16, ohne zeitlichen Zwischenraum gesendet bzw. weitergeleitet werden, so dass durch das dicht gepackte Senden, bzw. Weiterleiten, die zur Verfügung stehende Zeitdauer bestmöglich genutzt wird. Selbstverständlich ist es aber auch möglich bei Bedarf Sendepausen zwischen der Übertragung der einzelnen Datentelegramme einzubauen.

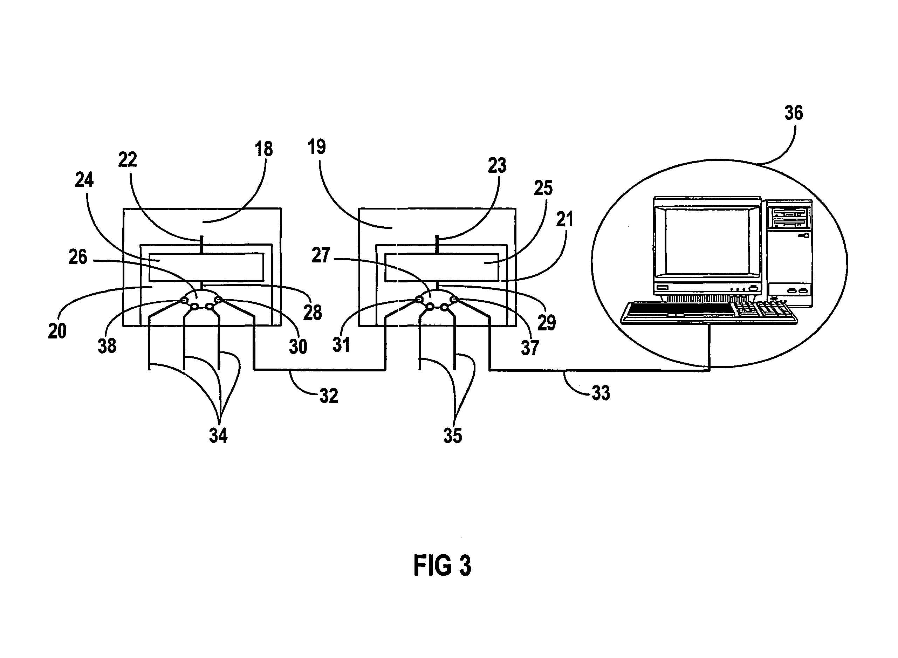

Figur 3 zeigt die prinzipielle Arbeitsweise in einem geschalteten Netzwerk. Dargestellt sind stellvertretend für ein Netzwerk ein Teilnehmer 18, beispielsweise ein Antrieb, und ein Teilnehmer 19, beispielsweise ein Steuerrechner, mit jeweils integrierten Koppeleinheiten 20, 21 und einem weiteren Teilnehmer 36 ohne Koppeleinheit, die durch die Datenverbindungen 32, 33 miteinander verbunden sind. Dabei ist die Koppeleinheit 20 über den externen Port 30, die Datenverbindung 32 und den externen Port 31 mit der Koppeleinheit 21 verbunden. Auf die Bezeichnung der anderen dargestellten externen Ports der Koppeleinheiten 20, 21 wurde aus Gründen der übersichtlichen Darstellung verzichtet. Auf die Darstellung weiterer Teilnehmer mit bzw. ohne integrierte Koppeleinheit wurde ebenfalls aus Gründen der übersichtlichen Darstellung verzichtet. Datenverbindungen 34, 35 zu weiteren Teilnehmern ausgehend von den dargestellten Koppeleinheiten 20, 21 sind nur angedeutet. Die Koppeleinheiten 20, 21 besitzen jeweils lokale Speicher 24, 25, die über die internen Schnittstellen 22, 23 mit den Teilnehmern 18, 19 verbunden sind. Über die Schnittstellen 22, 23 tauschen die Teilnehmer 18, 19 Daten mit den entsprechenden Koppeleinheiten 20, 21 aus. Die lokalen Speicher 24, 25 sind innerhalb der Koppeleinheiten 20, 21 über die Datenverbindungen 28, 29 mit den Steuerwerken 26, 27 verbunden. Die Steuerwerke 26, 27 empfangen Daten bzw. leiten Daten weiter über die internen Datenverbindungen 28, 29 von bzw. zu den lokalen Speichern 24, 25 oder über eine oder mehrere der externen Ports, beispielsweise Port 30 oder Port 31. Durch Anwendung des Verfahrens der Zeitsynchronisation haben die Koppeleinheiten 20, 21 stets eine gemeinsame synchrone Zeitbasis. Hat Teilnehmer 21 echtzeitkritische Daten, so werden diese zum vorausgeplanten Zeitpunkt während des Bereichs für die echtzeitkritische Kommunikation über die Schnittstelle 23, den lokalen Speicher 25 und die Verbindung 29 vom Steuerwerk 27 abgeholt und von dort über den vorgesehenen externen Port, beispielsweise Port 31, zur Koppeleinheit 20 gesendet. Sendet Teilnehmer 36 zur gleichen Zeit, also während der echtzeitkritischen Kommunikation, nicht echtzeitkritische Daten, beispielsweise für eine Internetabfrage, über die Datenverbindung 33, so werden diese vom Steuerwerk 27 über den externen Port 37 empfangen und über die interne Verbindung 29 an den lokalen Speicher 25 weitergeleitet und dort zwischengespeichert. Von dort werden sie erst im Bereich für die nicht echtzeitkritische Kommunikation wieder abgeholt und an den Empfänger weitergeleitet, d.h. sie werden in den zweiten Bereich des Übertragungszyklus, der für die spontane, nicht echtzeitkritische Kommunikation vorbehalten ist, verschoben, wodurch Störungen der Echtzeitkommunikation ausgeschlossen werden. Für den Fall, dass nicht alle zwischengespeicherten, nicht echtzeitkritischen Daten während des, für die Übertragung der nicht echtzeitkritischen Daten vorgesehenen Bereichs eines Übertragungszyklus übertragen werden können, werden sie im lokalen Speicher 25 der Koppeleinheit 21 solange zwischengespeichert, bis sie während eines, für die Übertragung der nicht echtzeitkritischen Daten vorgesehenen Bereichs eines späteren Übertragungszyklus übertragen werden können, wodurch Störungen der Echtzeitkommunikation in jedem Fall ausgeschlossen werden.
Die echtzeitkritischen Datentelegramme, die über Datenverbindung 32 über den externen Port 30 beim Steuerwerk 26 der Koppeleinheit 20 eintreffen, werden unmittelbar über die entsprechenden externen Ports weitergeleitet. Dies ist möglich, da die Echtzeitkommunikation im Voraus geplant ist und deshalb für alle zu übertragenden, echtzeitkritischen Datentelegramme Sende- und Empfangszeitpunkt, alle jeweils beteiligten Koppeleinheiten sowie alle Zeitpunkte für die Weiterleitung und alle Empfänger der echtzeitkritischen Datentelegramme bekannt sind, d.h. es ist beispielsweise beim Steuerwerk 26 der Koppeleinheit 20 vermerkt, dass die zum Zeitpunkt X ankommenden echtzeitkritischen Datentelegramme über den externen Port 38 an die nächste Koppeleinheit weitergesendet werden sollen. Durch die im Voraus erfolgte Planung der Echtzeitkommunikation ist auch sichergestellt, dass es beispielsweise auf der Datenverbindung 34 ausgehend von Port 38 zu keinen Datenkollisionen kommt. Dasselbe gilt natürlich für alle anderen Datenverbindungen, bzw. Ports während der Echtzeitkommunikation. Die Weiterleitungszeitpunkte aller echtzeitkritischen Datenpakete von den jeweils beteiligten Koppeleinheiten sind ebenfalls vorher geplant und damit eindeutig festgelegt. Das Ankommen der echtzeitkritischen Datentelegrammen beispielsweise im Steuerwerk 26 der Koppeleinheit 20 ist deshalb so geplant, dass die betrachteten, echtzeitkritischen Datentelegramme spätestens zum Weiterleitungszeitpunkt oder früher im Steuerwerk 26 der Koppeleinheit 20 ankommen. Damit ist das Problem von Zeitunschärfen, die sich insbesondere bei langen Übertragungsketten bemerkbar machen, eliminiert. Daten die beispielsweise für den Teilnehmer 18 bestimmt sind und im lokalen Speicher 24 der Koppeleinheit 20 zwischengespeichert wurden, werden von diesem zu gegebener Zeit abgeholt, echtzeitkritische Daten zu den vorher festgelegten Zeitpunkten und nicht echtzeitkritische Daten während des dafür vorgesehenen Bereichs.

Wie oben ausgeführt ist folglich ein gleichzeitiger Betrieb von echtzeitkritischer und nicht echtzeitkritischer Kommunikation im selben schaltbaren Datennetz, sowie ein beliebiger Anschluss von zusätzlichen Teilnehmern an das schaltbare Datennetz möglich, ohne die Echtzeitkommunikation selbst störend zu beeinflussen.

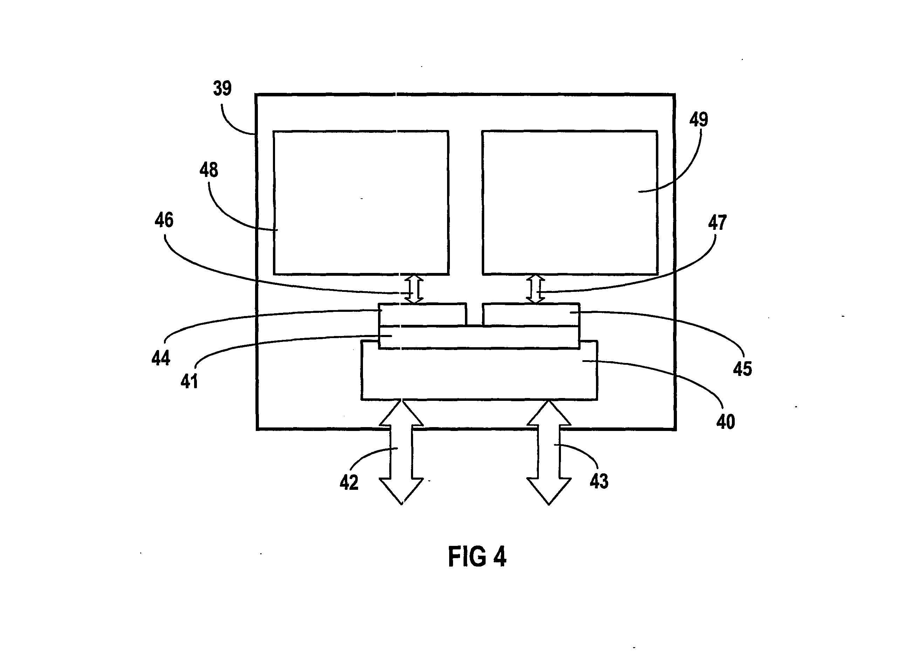

Figur 4 zeigt eine schematische Darstellung der Schnittstellen zwischen einem lokalen Teilnehmer und einer Koppeleinheit. Die Koppeleinheit 40 ist gemäß der offenbarten Erfindung in den Teilnehmer 39, beispielsweise ein Steuerrechner 1 eines Automatisierungssystems, integriert. Der Teilnehmer 39 nimmt sowohl an der echtzeitkritischen als auch an der nicht echtzeitkritischen Kommunikation teil, deshalb sind echtzeitkritische Applikationen 48, beispielsweise zur Steuerung von Antrieben eines Automatisierungssystems, und nicht echtzeitkritische Applikationen 49, beispielsweise Browser zur spontanen Internetkommunikation oder Textverarbeitungsprogramme, auf dem Teilnehmer 39 installiert. Aus Gründen der Übersichtlichkeit werden nur logische und keine physikalischen Verbindungen, insbesondere Datenverbindungen dargestellt. Die Kommunikation zwischen Teilnehmer 39 und integrierter Koppeleinheit 40 erfolgt über den lokalen Speicher 41, in dem die entsprechenden Daten, die vom Teilnehmer 39 gesendet werden, bzw. für den Teilnehmer 39 bestimmt sind, zwischengespeichert werden. Auf den lokalen Speicher 41 muß sowohl der Teilnehmer 39 als auch die Koppeleinheit 40 zugreifen können, der physikalische Ort des lokalen Speichers 41, der im gezeigten Ausführungsbeispiel beispielsweise Teil der Koppeleinheit 40 ist, ist dabei nicht von Bedeutung. Um die Trennung zwischen echtzeitkritischer und nicht echtzeitkritischer Kommunikation und damit eine störungsfreie Echtzeitkommunikation zu gewährleisten, sind zwei getrennte Zugänge zum Teilnehmer 39 erforderlich, wobei ein Zugang für den Austausch von echtzeitkritischen Daten und der andere Zugang für den Austausch von nicht echtzeitkritischen Daten vorgesehen ist. Die physikalische Kommunikation erfolgt infolgedessen über zwei getrennte logische Schnittstellen 42 und 43, zwischen dem aus Gründen der Übersichtlichkeit nicht dargestellten Datennetz und der Koppeleinheit 40, und den logisch getrennten Kommunikationskanäle 46 und 47 zwischen dem Speicher 41, also der Koppeleinheit 40, und dem Teilnehmer 39. Die Schnittstelle 42 und der Kommunikationskanal 46 charakterisieren dabei die Kommunikationskanäle für die echtzeitkrische, die Schnittstelle 43 und der Kommunikationskanal 47 die Kommunikationskanäle für die nicht echtzeitkritische Kommunikation. Die zwei jeweils dargestellten, logisch voneinander getrennten Schnittstellen 42 bzw. 43 und die Kommunikationskanäle 46 bzw. 47 sind physikalisch gesehen jedoch jeweils der gleiche Kommunikationskanal, der zur Übermittlung der jeweiligen Daten in beiden Richtungen benutzt wird. Insbesondere erfolgt die getrennte Signalisierung welche Art von Daten vorliegen und abgeholt werden können über die beiden logisch voneinander getrennten Kommunikationskanäle 46 und 47, wobei über Kommunikationskanal 46 die Bereitstellung von echtzeitkritischen Daten für die echtzeitkritischen Applikationen 48 und über Kommunikationskanal 47 die Bereitstellung von nicht echtzeitkritischen Daten für die nicht echtzeitkritischen Applikationen 49 signalisiert wird. Damit können Treiber 44 und die echtzeitkritischen Applikationen 48 mit einer höheren Priorität bearbeitet werden als Treiber 45 und die nicht echtzeitkritischen Applikationen 49. Damit kann auch im Teilnehmer 39 die echtzeitfähige Verarbeitung der echtzeitkritischen Daten garantiert werden. Die Trennung der echtzeitkritischen und der nicht echtzeitkritischen Kommunikation, die für die Gewährleistung der Echtzeitkommunikation notwendig ist, hat zudem den Vorteil, dass für die nicht echtzeitkritische Kommunikation bestehende Programme, insbesondere existierende Treiber, ohne Einschränkung verwendet werden können, wodurch einerseits keine teuren Neuentwicklungen notwendig sind und andererseits die weitere Evolution der nicht echtzeitkritischen Standardkommunikation keinen Einfluß auf die Echtzeitkommunikation selbst hat und deshalb ohne Einschränkung in die offenbarte Erfindung einbezogen werden kann.

Zusammenfassend betrifft die Erfindung ein System und ein Verfahren, das sowohl eine echtzeitkritische als auch eine nicht echtzeitkritische Kommunikation in einem schaltbaren Datennetz, bestehend aus Teilnehmern und Koppeleinheiten, beispielsweise eines verteilten Automatisierungssystems durch einen zyklischen Betrieb ermöglicht. In einem sogenannten Übertragungszyklus (12) existiert für alle Teilnehmer und Koppeleinheiten des schaltbaren Datennetzes jeweils wenigstens ein Bereich (13) zur Übermittlung echtzeitkritischer und wenigstens ein Bereich (14) zur Übermittlung nicht echtzeitkritischer Daten, wodurch die echtzeitkritische von der nicht echtzeitkritischen Kommunikation getrennt wird. Da alle Teilnehmer und Koppeleinheiten immer auf eine gemeinsame Zeitbasis synchronisiert sind, finden die jeweiligen Bereiche zur Übermittlung von Daten für alle Teilnehmer und Koppeleinheiten jeweils zum selben Zeitpunkt statt, d.h. die echtzeitkritische Kommunikation findet zeitlich unabhängig von der nicht echtzeitkritischen Kommunikation statt und wird deshalb nicht von dieser beeinflusst. Die echtzeitkritische Kommunikation wird im Voraus geplant. Einspeisen der Datentelegramme beim originären Sender sowie deren Weiterleitung mittels der beteiligten Koppeleinheiten erfolgt zeitbasiert. Durch Zwischenspeicherung in den jeweiligen Koppeleinheiten wird erreicht, dass zu beliebiger Zeit auftretende, spontane, internetfähige, nicht echtzeitkritische Kommunikation in den, für die nicht echtzeitkritische Kommunikation vorgesehenen Übertragungsbereich (14) eines Übertragungszyklus (12) verschoben und auch nur dort übertragen wird.

## Patentansprüche

1. Verfahren zur Übertragung von Daten über ein Datennetz, bei dem echtzeitkritische und nicht echtzeitkritische Daten übertragen werden, wobei das Datennetz zwischen wenigstens zwei Teilnehmern, insbesondere einem Sender und einem Empfänger aufgebaut ist, wobei die Daten in wenigstens einem Übertragungszyklus (12) mit einstellbarer Zeitdauer (17) übertragen werden, jeder Übertragungszyklus (12) in wenigstens einen ersten Bereich (13) zur Übertragung von echtzeitkritischen Daten und wenigstens einen zweiten Bereich (14) zur Übertragung von nicht echtzeitkritischen Daten unterteilt ist,
**dadurch gekennzeichnet, dass** das Datennetz ein schaltbares Ethernet-Datennetz im Bereich industrieller Anlagen ist, in welchem jedem Teilnehmer eine Koppeleinheit zugeordnet ist, die zum Senden und/oder zum Empfangen und/oder zur Weiterleitung der zu übertragenden Daten vorgesehen ist, dass alle Koppeleinheiten des schaltbaren Datennetzes durch Zeitsynchronisation untereinander eine gemeinsame synchrone Zeitbasis aufweisen, und dass für alle zu übertragenden, echtzeitkritischen Datentelegramme zur Echtzeitsteuerung in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt sind.

2. Verfahren nach Anspruch 1,
**dadurch gekennzeichnet,**
**dass** alle nicht echtzeitkritischen Daten, die während des für die echtzeitkritische Kommunikation vorgesehenen Bereichs (13) eines Übertragungszyklus (12) übertragen werden sollen, von der jeweiligen Koppeleinheit zwischengespeichert und während des für die nicht echtzeitkritische Kommunikation vorgesehenen Bereichs (14) dieses oder eines folgenden Übertragungszyklus übertragen werden.

3. Verfahren nach Anspruch 1 oder 2,
**dadurch gekennzeichnet,**
**dass** alle nicht echtzeitkritischen Daten, die während des für die Übertragung der nicht echtzeitkritischen Daten vorgesehenen Bereichs (14) eines Übertragungszyklus (12) nicht übertragen werden können, von der jeweiligen Koppeleinheit zwischengespeichert und während des für die Übertragung der nicht echtzeitkritischen Daten vorgesehenen Bereichs (14) eines späteren Übertragungszyklus übertragen werden.

4. Verfahren nach einem der vorstehenden Ansprüche,
**dadurch gekennzeichnet,**
**dass** die Zeitdauer des Bereichs (14) zur Übertragung von nicht echtzeitkritischen Daten innerhalb eines Übertragungszyklus (12) automatisch durch die Zeitdauer des Bereichs (13) zur Übertragung von echtzeitkritischen Daten festgelegt wird.

5. Verfahren nach einem der vorstehenden Ansprüche,
**dadurch gekennzeichnet,**
**dass** die Zeitdauer des Bereichs (13) zur Übertragung von echtzeitkritischen Daten innerhalb eines Übertragungszyklus (12) jeweils durch die verbindungsspezifisch zu übertragenden Daten bestimmt wird.

6. Verfahren nach einem der vorstehenden Ansprüche,
**dadurch gekennzeichnet,**
**dass** die Zeitdauer (17) eines Übertragungszyklus (12) wenigstens einmal vor der jeweiligen Durchführung der Datenübertragung festgelegt wird.

7. Verfahren nach einem der vorstehenden Ansprüche,
**dadurch gekennzeichnet,**
**dass** die Zeitdauer (17) eines Übertragungszyklus (12) und/oder die Zeitdauer des Bereichs (13) zur Übertragung von echtzeitkritischen Daten eines Übertragungszyklus (12) verändert werden kann.

8. Verfahren nach einem der vorstehenden Ansprüche,
**dadurch gekennzeichnet,**
**dass** die Zeitdauer (17) eines Übertragungszyklus (12) zwischen 1 Mikrosekunde und 10 Sekunden beträgt.

9. Verfahren nach einem der vorstehenden Ansprüche,
**dadurch gekennzeichnet,**
**dass** Neuplanungen der Echtzeitkommunikation jederzeit im laufenden Betrieb eines Automatisierungssystems durchgeführt werden können.

10. Verfahren nach einem der vorstehenden Ansprüche,
**dadurch gekennzeichnet,**
**dass** die Zeitdauer (17) eines Übertragungszyklus (12) durch Neuplanung der Echtzeitkommunikation verändert werden kann.

11. Verfahren nach einem der vorstehenden Ansprüche,
**dadurch gekennzeichnet,**
**dass** ein Teil des für die Übertragung der echtzeitkritischen Daten vorgesehenen Bereichs (13) des Übertragungszyklus (12) für die Übertragung von Daten zur Organisation der Datenübertragung (15) vorgesehen ist.

12. Verfahren nach einem der vorstehenden Ansprüche,
**dadurch gekennzeichnet,**
**dass** die Daten zur Organisation der Datenübertragung (15) am Anfang des Bereichs (13) zur Übertragung echtzeitkritischer Daten des Übertragungszyklus (12) übertragen werden.

13. Verfahren nach einem der vorstehenden Ansprüche,
**dadurch gekennzeichnet,**
**dass** die Daten zur Organisation der Datenübertragung (15) Daten zur Zeitsynchronisation der Teilnehmer und Koppeleinheiten des Datennetzes und/oder Daten zur Topologieerkennung des Netzwerks enthalten.

14. Verfahren nach einem der vorstehenden Ansprüche,
**dadurch gekennzeichnet,**
**dass** für alle zu übertragenden, echtzeitkritischen Datentelegramme Sende- und Empfangszeitpunkt bei Sender und/oder Empfänger vor Beginn der jeweiligen Durchführung der Datenübertragung vermerkt sind.

15. Verfahren nach einem der vorstehenden Ansprüche,
**dadurch gekennzeichnet,**
**dass** jedes echtzeitkritische Datentelegramm spätestens zum Weiterleitungszeitpunkt oder früher bei der entsprechenden Koppeleinheit ankommt.

16. Verfahren nach einem der vorstehenden Ansprüche,
**dadurch gekennzeichnet,**
**dass** die echtzeitkritischen Datentelegramme unmittelbar, ohne zeitlichen Zwischenraum gesendet bzw. weitergeleitet werden.

17. Verfahren nach einem der vorstehenden Ansprüche,
**dadurch gekennzeichnet,**
**dass** Verbindungsstrecken eines schaltbaren Datennetzes, die für die nicht echtzeitkritische Kommunikation nicht benutzt werden dürfen, bei der echtzeitkritischen Kommunikation benutzt werden.

18. Verfahren nach einem der vorstehenden Ansprüche,
**dadurch gekennzeichnet,**
**dass** wenigstens ein Teilnehmer eines schaltbaren Datennetzes eine echtzeitkritische Kommunikation und/oder eine nicht echtzeitkritische Kommunikation, insbesondere Internetkommunikation, parallel im selben schaltbaren Datennetz durchführen kann, wobei die stattfindende nicht echtzeitkritische Kommunikation die parallel stattfindende echtzeitkritische Kommunikation nicht beeinflusst.

19. Verfahren nach einem der vorstehenden Ansprüche,
**dadurch gekennzeichnet,**
**dass** wenigstens ein beliebiger Teilnehmer, insbesondere ein Teilnehmer mit der Fähigkeit zur offenen, internetfähigen Kommunikation, mit oder ohne zugeordnete Koppeleinheit, zu einem schaltbaren Datennetz hinzugefügt werden kann.

20. System zur Übertragung von Daten über ein Datennetz mit mindestens einer mit einem schaltbaren Datennetz koppelbaren Datenverarbeitungsvorrichtung, das echtzeitkritische und nicht echtzeitkritische Daten überträgt, wobei das Datennetz zwischen wenigstens zwei Teilnehmern, insbesondere einem Sender und einem Empfänger aufgebaut ist, wobei das System zumindest ein Mittel zur Übertragung von Daten in wenigstens einem Übertragungszyklus (12) mit einstellbarer Zeitdauer (17) aufweist, jeder Übertragungszyklus (12) in wenigstens einen ersten Bereich (13) zur Übertragung von echtzeitkritischen Daten und wenigstens einen zweiten Bereich (14) zur Übertragung von nicht echtzeitkritischen Daten unterteilt ist, **dadurch gekennzeichnet, dass** das Datennetz ein schaltbares Ethernet-Datennetz im Bereich industrieller Anlagen ist, in welchem jedem Teilnehmer eine Koppeleinheit zugeordnet ist, die zum Senden und/oder zum Empfangen und/oder zur Weiterleitung der zu übertragenden Daten vorgesehen ist, dass das System zumindest ein Mittel aufweist, das alle Koppeleinheiten des schaltbaren Datennetzes durch Zeitsynchronisation untereinander mit einer gemeinsamen synchronen Zeitbasis versorgt, und dass das System zumindest ein Mittel aufweist, das für alle zu übertragenden, echtzeitkritischen Datentelegramme zur Echtzeitsteuerung in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt.

21. System nach Anspruch 20,
**dadurch gekennzeichnet,**
**dass** das System zumindest ein Mittel aufweist, das dafür sorgt, dass alle nicht echtzeitkritischen Daten, die während des für die echtzeitkritische Kommunikation vorgesehenen Bereichs (13) eines Übertragungszyklus (12) übertragen werden sollen, von der jeweiligen Koppeleinheit zwischengespeichert und während des für die nicht echtzeitkritische Kommunikation vorgesehenen Bereichs (14) dieses oder eines folgenden Übertragungszyklus übertragen werden.

22. System nach Anspruch 20 oder 21,
**dadurch gekennzeichnet,**
**dass** das System zumindest ein Mittel aufweist, das dafür sorgt, dass alle nicht echtzeitkritischen Daten, die während des für die Übertragung der nicht echtzeitkritischen Daten vorgesehenen Bereichs (14) eines Übertragungszyklus (12) nicht übertragen werden können, von der jeweiligen Koppeleinheit zwischengespeichert und während des für die Übertragung der nicht echtzeitkritischen Daten vorgesehenen Bereichs (14) eines späteren Übertragungszyklus übertragen werden.

23. System nach einem der Ansprüche 20 bis 22,
**dadurch gekennzeichnet,**
**dass** das System zumindest ein Mittel aufweist, das die Zeitdauer des Bereichs (14) zur Übertragung von nicht echtzeitkritischen Daten innerhalb eines Übertragungszyklus (12) automatisch durch die Zeitdauer des Bereichs (13) zur Übertragung von echtzeitkritischen Daten festlegt.

24. System nach einem der Ansprüche 20 bis 23,
**dadurch gekennzeichnet,**
**dass** das System zumindest ein Mittel aufweist, das die Zeitdauer des Bereichs (13) zur Übertragung von echtzeitkritischen Daten innerhalb eines Übertragungszyklus (12) jeweils durch die verbindungsspezifisch zu übertragenden Daten bestimmt.

25. System nach einem der Ansprüche 20 bis 24,
**dadurch gekennzeichnet,**
**dass** das System zumindest ein Mittel aufweist, das die Zeitdauer (17) eines Übertragungszyklus (12) wenigstens einmal vor der jeweiligen Durchführung der Datenübertragung festlegt.

26. System nach einem der Ansprüche 20 bis 25,
**dadurch gekennzeichnet,**
**dass** das System zumindest ein Mittel aufweist, das die Zeitdauer (17) eines Übertragungszyklus (12) und/oder die Zeitdauer des Bereichs (13) zur Übertragung von echtzeitkritischen Daten eines Übertragungszyklus (12) verändert.

27. System nach einem der Ansprüche 20 bis 26,
**dadurch gekennzeichnet,**
**dass** das System zumindest ein Mittel aufweist, das Neuplanungen der Echtzeitkommunikation jederzeit im laufenden Betrieb eines Automatisierungssystems durchführt.

28. System nach einem der Ansprüche 20 bis 27,
**dadurch gekennzeichnet,**
**dass** das System zumindest ein Mittel aufweist, das die Zeitdauer (17) eines Übertragungszyklus (12) durch Neuplanung der Echtzeitkommunikation verändert.

29. System nach einem der Ansprüche 20 bis 28,
**dadurch gekennzeichnet,**
**dass** das System zumindest ein Mittel aufweist, das einen Teil des für die Übertragung der echtzeitkritischen Daten vorgesehenen Bereichs (13) des Übertragungszyklus (12) für die Übertragung von Daten zur Organisation der Datenübertragung (15) vorsieht.

30. System nach einem der Ansprüche 20 bis 29,
**dadurch gekennzeichnet,**
**dass** das System zumindest ein Mittel aufweist, das die Daten zur Organisation der Datenübertragung (15) am Anfang des Bereichs (13) zur Übertragung der echtzeitkritischen Daten des Übertragungszyklus (12) überträgt.

31. System nach einem der Ansprüche 20 bis 30,
**dadurch gekennzeichnet,**
**dass** das System zumindest ein Mittel aufweist, das für alle zu übertragenden, echtzeitkritischen Datentelegramme Sende- und Empfangszeitpunkt bei Sender und/oder Empfänger vor Beginn der jeweiligen Durchführung der Datenübertragung vermerkt.

32. System nach einem der Ansprüche 20 bis 31,
**dadurch gekennzeichnet,**
**dass** das System zumindest ein Mittel aufweist, das dafür sorgt, dass jedes echtzeitkritische Datentelegramm spätestens zum Weiterleitungszeitpunkt oder früher bei der entsprechenden Koppeleinheit ankommt.

33. System nach einem der Ansprüche 20 bis 32,
**dadurch gekennzeichnet,**
**dass** das System zumindest ein Mittel aufweist, das die echtzeitkritischen Datentelegramme unmittelbar, ohne zeitlichen Zwischenraum sendet bzw. weiterleitet.

34. System nach einem der Ansprüche 20 bis 33,
**dadurch gekennzeichnet,**
**dass** das System zumindest ein Mittel aufweist, das dafür sorgt, dass Verbindungsstrecken eines schaltbaren Datennetzes, die für die nicht echtzeitkritische Kommunikation nicht benutzt werden dürfen, bei der echtzeitkritischen Kommunikation benutzt werden.

35. System nach einem der Ansprüche 20 bis 34,
**dadurch gekennzeichnet,**
**dass** eine Koppeleinheit in einen Teilnehmer integriert ist.

36. System nach einem der Ansprüche 20 bis 35,
**dadurch gekennzeichnet,**
**dass** eine Koppeleinheit zwei getrennte Zugänge zum jeweiligen Teilnehmer aufweist, wobei ein Zugang für den Austausch von echtzeitkritischen Daten und der andere Zugang für den Austausch von nicht echtzeitkritischen Daten vorgesehen ist.

37. System nach einem der Ansprüche 20 bis 36,
**dadurch gekennzeichnet, dass** das System zumindest ein Mittel aufweist, das dafür sorgt, dass wenigstens ein Teilnehmer eines schaltbaren Datennetzes eine echtzeitkritische Kommunikation und/oder eine nicht echtzeitkritische Kommunikation, insbesondere Internetkommunikation, parallel im selben schaltbaren Datennetz durchführen kann, wobei die stattfindende nicht echtzeitkritische Kommunikation die parallel stattfindende echtzeitkritische Kommunikation nicht beeinflusst.

38. System nach einem der Ansprüche 20 bis 37,
**dadurch gekennzeichnet,**
**dass** das System zumindest ein Mittel aufweist, das dafür sorgt, dass wenigstens ein beliebiger Teilnehmer, insbesondere ein Teilnehmer mit der Fähigkeit zur offenen, internetfähigen Kommunikation, mit oder ohne zugeordnete Koppeleinheit, zu einem schaltbaren Datennetz hinzugefügt werden kann.

39. Teilnehmer für ein System nach einem der Ansprüche 20-38 und/oder ein Teilnehmer mit Mitteln zur Durchführung des Verfahrens nach einem der Ansprüche 1 bis 19.

40. Teilnehmer nach Anspruch 39,
**dadurch gekennzeichnet,**
**dass** der Teilnehmer ein Teilnehmer eines Automatisierungssystems ist.

41. Teilnehmer nach einem der Ansprüche 39 oder 40,
**dadurch gekennzeichnet,**
**dass** der Teilnehmer zumindest ein Mittel zur Übertragung echtzeitkritischer und nicht echtzeitkritischer Daten auf weist, wobei die Daten in wenigstens einem Übertragungszyklus (12) mit einstellbarer Zeitdauer (17) übertragen werden, jeder Übertragungszyklus (12) in wenigstens einen ersten Bereich (13) zur Übertragung von echtzeitkritischen Daten zur Echtzeitsteuerung und wenigstens einen zweiten Bereich (14) zur Übertragung von nicht echtzeitkritischen Daten unterteilt ist.

## Claims

1. Method for transmitting data via a data network, in which real-time-critical and non-real-time-critical data are transmitted, the data network being set up between at least two users, especially a transmitter and a receiver, the data being transmitted in at least one transmission cycle (12) with adjustable period (17), each transmission cycle (12) being subdivided into at least one first section (13) for the transmission of real-time-critical data and at least one second section (14) for the transmission of non-real-time-critical data, **characterized in that** the data network is a switched Ethernet data network in the field of industrial systems, in which each user is allocated a switching unit which is provided for transmitting and/or receiving and/or forwarding the data to be transmitted, that all switching units of the switched data network exhibit a common synchronous time base due to mutual timing synchronization, and that in all switching units involved in each case, all times for forwarding the real-time-critical data telegrams and the respective associated links via which the real-time-critical data telegrams are forwarded are noted before the beginning of the respective performance of the data transmission for all real-time-critical data telegrams to be transmitted for real-time control.

2. Method according to Claim 1, **characterized in that** all non-real-time-critical data which are intended to be transmitted during the section (13) of a transmission cycle (12) which is provided for the real-time-critical communication are temporarily stored by the respective switching unit and are transmitted during the section (14) of this or a subsequent transmission cycle which is intended for the non-real-time-critical communication.

3. Method according to Claim 1 or 2, **characterized in that** all non-real-time-critical data which cannot be transmitted during the section (14) of a transmission cycle (12) intended for the transmission of the non-real-time-critical data are temporarily stored by the respective switching unit and transmitted during the section (14) of a later transmission cycle which is intended for the transmission of the non-real-time-critical data.

4. Method according to one of the preceding claims, **characterized in that** the period of the section (14) for the transmission of non-real-time-critical data within a transmission cycle (12) is automatically established by the period of the section (13) for the transmission of real-time-critical data.

5. Method according to one of the preceding claims, **characterized in that** the period of the section (13) for the transmission of real-time-critical data within a transmission cycle (12) is in each case determined by the data to be transmitted in a connection-oriented manner.

6. Method according to one of the preceding claims, **characterized in that** the period (17) of a transmission cycle (12) is established at least once before the respective data transmission takes place.

7. Method according to one of the preceding claims, **characterized in that** the period (17) of a transmission cycle (12) and/or the period of the section (13) for the transmission of real-time-critical data of a transmission cycle (12) can be changed.

8. Method according to one of the preceding claims, **characterized in that** the period (17) of a transmission cycle (12) is between 1 microsecond and 10 seconds.

9. Method according to one of the preceding claims, **characterized in that** the real-time communication can be newly planned at any time during active operation of an automation system.

10. Method according to one of the preceding claims, **characterized in that** the period (17) of a transmission cycle (12) can be changed by newly planning the real-time communication.

11. Method according to one of the preceding claims, **characterized in that** a part of the section (13) of the transmission cycle (12) intended for the transmission of the real-time-critical data is intended for the transmission of data for the organization of the data transmission (15).

12. Method according to one of the preceding claims, **characterized in that** the data for the organization of the data transmission (15) are transmitted at the beginning of the section (13) for the transmission of real-time-critical data of the transmission cycle (12).

13. Method according to one of the preceding claims, **characterized in that** the data for the organization of the data transmission (15) contain data for the timing synchronization of the users and switching units of the data network and/or data for recognizing the topology of the network.

14. Method according to one of the preceding claims, **characterized in that** the transmitting and receiving time for all real-time-critical data telegrams to be transmitted are noted at the transmitter and/or receiver before the beginning of the respective performance of the data transmission.

15. Method according to one of the preceding claims, **characterized in that** each real-time-critical data telegram arrives at the corresponding switching unit at the latest at the forwarding time or earlier.

16. Method according to one of the preceding claims, **characterized in that** the real-time-critical data telegrams are transmitted or, respectively, forwarded immediately without time interval.

17. Method according to one of the preceding claims, **characterized in that** links of a switched data network which must not be used for the non-real-time-critical communication are used in the real-time-critical communication.

18. Method according to one of the preceding claims, **characterized in that** at least one user of a switched data network can perform a real-time-critical communication and/or a non-real-time-critical communication, especially an Internet communication, in parallel in the same switched data network, wherein the non-real-time-critical communication taking place does not influence the real-time-critical communication taking place in parallel.

19. Method according to one of the preceding claims, **characterized in that** at least one arbitrary user, especially a user having the capability for open Internet-capable communication, with or without associated switching unit, can be added to a switched data network.

20. System for transmitting data via a data network, comprising at least one data processing device which can be coupled to a switched data network and which transmits real-time-critical and non-real-time-critical data, the data network being set up between at least two users, especially a transmitter and a receiver, the system exhibiting at least one means for transmitting data in at least one transmission cycle (12) with adjustable period (17), each transmission cycle (12) being subdivided into at least one first section (13) for transmitting real-time-critical data and at least one second section (14) for transmitting non-real-time-critical data, **characterized in that** the data network is a switched Ethernet data network in the field of industrial systems, in which each user is allocated a switching unit which is provided for transmitting and/or receiving and/or forwarding the data to be transmitted, that the system exhibits at least one means which supplies all switching units of the switched data network with a common synchronous time base by means of mutual timing synchronization, and that the system exhibits at least one means which notes all times for the forwarding of the real-time-critical data telegrams and the respective associated links via which the real-time-critical data telegrams are forwarded for all real-time-critical data telegrams to be transmitted for real-time control in all switching units involved in each case, before the beginning of the respective performance of the data transmission.

21. System according to Claim 20, **characterized in that** the system exhibits at least one means which ensures that all non-real-time-critical data which are to be transmitted during the section (13) of a transmission cycle (12) intended for the real-time-critical communication are temporarily stored by the respective switching unit and are transmitted during the section (14), intended for the non-real-time-critical communication, of this or a subsequent transmission cycle.

22. System according to one of Claims 20 or 21, **characterized in that** the system exhibits at least one means which ensures that all non-real-time-critical data which cannot be transmitted during the section (14) of a transmission cycle (12) intended for the transmission of the non-real-time-critical data are temporarily stored by the respective switching unit and are transmitted during the section (14), intended for the transmission of the non-real-time-critical data, of a later transmission cycle.

23. System according to one of Claims 20 to 22, **characterized in that** the system exhibits at least one means which automatically establishes the period of the section (14) for the transmission of non-real-time-critical data within a transmission cycle (12) by means of the period of the section (13) for transmitting real-time-critical data.

24. System according to one of Claims 20 to 23, **characterized in that** the system exhibits at least one means which in each case determines the period of the section (13) for transmitting real-time-critical data within a transmission cycle (12) by means of the data to be transmitted in a connection-oriented manner.

25. System according to one of Claims 20 to 24, **characterized in that** the system exhibits at least one means which establishes the period (17) of a transmission cycle (12) at least once before the respective performance of the data transmission.

26. System according to one of Claims 20 to 25, **characterized in that** the system exhibits at least one means which changes the period (17) of a transmission cycle (12) and/or the period of the section (13) for the transmission of real-time-critical data of a transmission cycle (12).

27. System according to one of Claims 20 to 26, **characterized in that** the system exhibits at least one means which newly plans the real-time communication at any time during active operation of an automation system.

28. System according to one of Claims 20 to 27, **characterized in that** the system exhibits at least one means which changes the period (17) of a transmission cycle (12) by newly planning the real-time communication.

29. System according to one of Claims 20 to 28, **characterized in that** the system exhibits at least one means which provides a part of the section (13) of the transmission cycle (12) provided for the transmission of the real-time-critical data for the transmission of data for the organization of the data transmission (15).

30. System according to one of Claims 20 to 29, **characterized in that** the system exhibits at least one means which transmits the data for the organization of the data transmission (15) at the beginning of the section (13) for the transmission of the real-time-critical data of the transmission cycle (12).

31. System according to one of Claims 20 to 30, **characterized in that** the system exhibits at least one means which notes the transmitting and receiving time at the transmitter and/or receiver for all real-time-critical data telegrams to be transmitted before the beginning of the respective performance of the data transmission.

32. System according to one of Claims 20 to 31, **characterized in that** the system exhibits at least one means which ensures that each real-time-critical data telegram arrives at the corresponding switching unit at the latest at the forwarding time or earlier.

33. The system according to one of Claims 20 to 32, **characterized in that** the system exhibits at least one means which transmits or forwards the real-time-critical data telegrams immediately without time interval.

34. The system according to one of Claims 20 to 33, **characterized in that** the system exhibits at least one means which ensures that links of a switched data network which must not be used for the non-real-time-critical communication are used in the real-time-critical communication.

35. The system according to one of Claims 20 to 34, **characterized in that** a switching unit is integrated in a user.

36. The system according to one of Claims 20 to 35, **characterized in that** a switching unit has two separate accesses to the respective user, one access being intended for exchanging real-time-critical data and the other access being intended for exchanging non-real-time-critical data.

37. The system according to one of Claims 20 to 36, **characterized in that** the system exhibits at least one means which ensures that at least one user of a switched data network can perform a real-time-critical communication and/or a non-real-time-critical communication, especially an Internet communication, in parallel in the same switched data network, wherein the non-real-time-critical communication taking place does not influence the real-time-critical communication taking place in parallel.

38. The system according to one of Claims 20 to 37, **characterized in that** the system exhibits at least one means which ensures that at least one arbitrary user, especially a user with the capability for open Internet-capable communication, with or without associated switching unit, can be added to a switched data network.

39. User for a system according to one of Claims 20 to 38 and/or a user with means to carry out the method according to one of Claims 1 to 19.

40. User according to Claim 39, **characterized in that** the user is a user of an automation system.

41. User according to one of Claims 39 or 40, **characterized in that** the user exhibits at least one means for transmitting real-time-critical and non-real-time-critical data, the data being transmitted in at least one transmission cycle (12) with adjustable period (17), each transmission cycle (12) being subdivided into at least one first section (13) for transmitting real-time-critical data for real-time control and at least one second section (14) for transmitting non-real-time-critical data.

## Revendications

1. Procédé de transmission de données par l'intermédiaire d'un réseau de données, dans lequel le réseau de données est construit entre au moins deux utilisateurs, notamment un émetteur et un récepteur, les données étant transmises dans au moins un cycle de transmission (12) ayant une durée réglable (17) et chaque cycle de transmission (12) étant divisé en au moins une première plage (13) destinée à la transmission de données critiques en temps réel et au moins une deuxième plage (14) destinée à la transmission de données non critiques en temps réel,
**caractérisé par le fait que** le réseau de données est un réseau de données commuté Ethernet dans le domaine des installations industrielles, réseau dans lequel il est associé à chaque utilisateur une unité de connexion qui est prévue pour l'émission et/ou la réception et/ou la retransmission des données à transmettre, que toutes les unités de connexion du réseau de données commuté comportent par synchronisation temporelle une base de temps synchrone commune et que, pour tous les télégrammes de données critiques en temps réel à transmettre pour la commande en temps réel, dans toutes les unités de connexion respectivement concernées, tous les instants destinés à la retransmission des télégrammes de données critiques en temps réel ainsi que les voies de liaison respectivement associées par l'intermédiaire desquelles les télégrammes de données critiques en temps réel sont retransmis sont notés avant le début de l'exécution respective de la transmission de données.

2. Procédé selon la revendication 1,
**caractérisé par le fait que** toutes les données non critiques en temps réel qui devaient être transmises pendant la plage (13), prévue pour la communication critique en temps réel, d'un cycle de transmission (12) sont mémorisées temporairement par l'unité de connexion respective et sont transmises pendant la plage (14), prévue pour la communication non critique en temps réel, de ce cycle de transmission ou d'un cycle de transmission suivant.

3. Procédé selon la revendication 1 ou 2,
**caractérisé par le fait que** toutes les données non critiques en temps réel qui ne peuvent pas être transmises pendant la plage (14), prévue pour la transmission des données non critiques en temps réel, d'un cycle de transmission (12) sont mémorisées temporairement par l'unité de connexion respective et sont transmises pendant la plage (14), prévue pour la transmission des données non critiques en temps réel, d'un cycle de transmission ultérieur.

4. Procédé selon l'une des revendications précédentes,
**caractérisé par le fait que** la durée de la plage (14) destinée à la transmission de données non critiques en temps réel à l'intérieur d'un cycle de transmission (12) est fixée automatiquement par la durée de la plage (13) destinée à la transmission de données critiques en temps réel.

5. Procédé selon l'une des revendications précédentes,
**caractérisé par le fait que** la durée de la plage (13) destinée à la transmission de données critiques en temps réel à l'intérieur d'un cycle de transmission (12) est déterminée à chaque fois à partir des données à transmettre de manière spécifique à la liaison.

6. Procédé selon l'une des revendications précédentes,
**caractérisé par le fait que** la durée (17) d'un cycle de transmission (12) est fixée au moins une fois avant l'exécution respective de la transmission de données.

7. Procédé selon l'une des revendications précédentes,
**caractérisé par le fait que** la durée (17) d'un cycle de transmission (12) et/ou la durée de la plage (13) destinée à la transmission de données critiques en temps réel d'un cycle de transmission (12) peuvent être modifiées.

8. Procédé selon l'une des revendications précédentes,
**caractérisé par le fait que** la durée (17) d'un cycle de transmission (12) est comprise entre 1 microseconde et 10 secondes.

9. Procédé selon l'une des revendications précédentes,
**caractérisé par le fait que** de nouvelles planifications de la communication en temps réel peuvent être effectuées à tout moment au cours du fonctionnement d'un système d'automatisation.

10. Procédé selon l'une des revendications précédentes,
**caractérisé par le fait que** la durée (17) d'un cycle de transmission (12) peut être modifiée par une nouvelle planification de la communication en temps réel.

11. Procédé selon l'une des revendications précédentes,
**caractérisé par le fait qu'**une partie de la plage (13), prévue pour la transmission des données critiques en temps réel, du cycle de transmission (12) est prévue pour la transmission de données destinées à l'organisation de la transmission de données (15).

12. Procédé selon l'une des revendications précédentes,
**caractérisé par le fait que** les données destinées à l'organisation de la transmission de données (15) sont transmises au début de la plage (13), destinée à la transmission de données critiques en temps réel, du cycle de transmission (12).

13. Procédé selon l'une des revendications précédentes,
**caractérisé par le fait que** les données destinées à l'organisation de la transmission de données (15) contiennent des données pour la synchronisation temporelle des utilisateurs et des unités de connexion du réseau de données et/ou des données pour la détection de la topologie du réseau.

14. Procédé selon l'une des revendications précédentes,
**caractérisé par le fait que**, pour tous les télégrammes de données critiques en temps réel à transmettre, des instants d'émission et de réception sont notés chez l'émetteur et/ou le récepteur avant le début de l'exécution respective de la transmission de données.

15. Procédé selon l'une des revendications précédentes,
**caractérisé par le fait que** chaque télégramme de données critique en temps réel arrive à l'unité de connexion correspondante au plus tard à l'instant de retransmission ou plus tôt.

16. Procédé selon l'une des revendications précédentes,
**caractérisé par le fait que** les télégrammes de données critiques en temps réel sont émis ou retransmis immédiatement, sans intervalle de temps intermédiaire.

17. Procédé selon l'une des revendications précédentes,
**caractérisé par le fait que** des voies de liaison d'un réseau de données commuté qui ne doivent pas être utilisées pour la communication non critique en temps réel sont utilisées lors de la communication critique en temps réel.

18. Procédé selon l'une des revendications précédentes,
**caractérisé par le fait qu'**au moins un utilisateur d'un réseau de données commuté peut effectuer parallèlement dans le même réseau de données commuté une communication critique en temps réel et/ou une communication non critique en temps réel, notamment une communication Internet, la communication non critique en temps réel qui a lieu n'influençant pas la communication critique en temps réel ayant lieu parallèlement.

19. Procédé selon l'une des revendications précédentes,
**caractérisé par le fait qu'**au moins un utilisateur quelconque, notamment un utilisateur ayant la capacité de réaliser une communication ouverte compatible avec internet, avec ou sans unité de connexion associée, peut être ajouté à un réseau de données commuté.

20. Système de transmission de données par l'intermédiaire d'un réseau de données avec au moins un dispositif de traitement de données qui peut être connecté à un réseau de données commuté et qui transmet des données critiques en temps réel et des données non critiques en temps réel, le réseau de données étant construit entre au moins deux utilisateurs, notamment un émetteur et un récepteur, le système comportant au moins un moyen pour la transmission de données dans au moins un cycle de transmission (12) ayant une durée réglable (17) et chaque cycle dé transmission (12) étant divisé en au moins une première plage (13) destinée à la transmission de données critiques en temps réel et au moins une deuxième plage (14) destinée à la transmission de données non critiques en temps réel,
**caractérisé par le fait que** le réseau de données est un réseau de données commuté Ethernet dans le domaine des installations industrielles, réseau dans lequel il est associé à chaque utilisateur une unité de connexion qui est prévue pour l'émission et/ou la réception et/ou la retransmission des données à transmettre, que le système comporte au moins un moyen qui alimente toutes les unités de connexion du réseau de données commuté, par synchronisation temporelle, avec une base de temps synchrone commune et que le système comporte au moins un moyen qui note avant le début de l'exécution respective de la transmission de données, pour tous les télégrammes de données critiques en temps réel à transmettre pour la commande en temps réel, dans toutes les unités de connexion respectivement concernées, tous les instants destinés à la retransmission des télégrammes de données critiques en temps réel ainsi que les voies de liaison respectivement associées par l'intermédiaire desquelles les télégrammes de données critiques en temps réel sont retransmis.

21. Système selon la revendication 20,
**caractérisé par le fait que** le système comporte au moins un moyen qui fait en sorte que toutes les données non critiques en temps réel qui devaient être transmises pendant la plage (13), prévue pour la communication critique en temps réel, d'un cycle de transmission (12) soient mémorisées temporairement par l'unité de connexion respective et soient transmises pendant la plage (14), prévue pour la communication non critique en temps réel, de ce cycle de transmission ou d'un cycle de transmission suivant.

22. Système selon la revendication 20 ou 21,
**caractérisé par le fait que** le système comporte au moins un moyen qui fait en sorte que toutes les données non critiques en temps réel qui ne peuvent pas être transmises pendant la plage (14), prévue pour la transmission des données non critiques en temps réel, d'un cycle de transmission (12) soient mémorisées temporairement par l'unité de connexion respective et soient transmises pendant la plage (14), prévue pour la transmission des données non critiques en temps réel, d'un cycle de transmission ultérieur.

23. Système selon l'une des revendications 20 à 22,
**caractérisé par le fait que** le système comporte au moins un moyen qui fixe la durée de la plage (14) destinée à la transmission de données non critiques en temps réel à l'intérieur d'un cycle de transmission (12) automatiquement à partir de la durée de la plage (13) destinée à la transmission de données critiques en temps réel.

24. Système selon l'une des revendications 20 à 23,
**caractérisé par le fait que** le système comporte au moins un moyen qui détermine la durée de la plage (13) destinée à la transmission de données critiques en temps réel à l'intérieur d'un cycle de transmission (12) à chaque fois à partir des données à transmettre de manière spécifique à la liaison.

25. Système selon l'une des revendications 20 à 24,
**caractérisé par le fait que** le système comporte au moins un moyen qui fixe la durée (17) d'un cycle de transmission (12) au moins une fois avant l'exécution respective de la transmission de données.

26. Système selon l'une des revendications 20 à 25,
**caractérisé par le fait que** le système comporte au moins un moyen qui modifie la durée (17) d'un cycle de transmission (12) et/ou la durée de la plage (13) destinée à la transmission de données critiques en temps réel d'un cycle de transmission (12).

27. Système selon l'une des revendications 20 à 26,
**caractérisé par le fait que** le système comporte au moins un moyen qui réalise de nouvelles planifications de la communication en temps réel à tout moment au cours du fonctionnement d'un système d'automatisation.

28. Système selon l'une des revendications 20 à 27,
**caractérisé par le fait que** le système comporte au moins un moyen qui modifie la durée (17) d'un cycle de transmission (12) par le biais d'une nouvelle planification de la communication en temps réel.

29. Système selon l'une des revendications 20 à 28,
**caractérisé par le fait que** le système comporte au moins un moyen qui prévoit une partie de la plage (13), prévue pour la transmission des données critiques en temps réel, du cycle de transmission (12) pour la transmission de données destinées à l'organisation de la transmission de données (15).

30. Système selon l'une des revendications 20 à 29,
**caractérisé par le fait que** le système comporte au moins un moyen qui transmet les données destinées à l'organisation de la transmission de données (15) au début de la plage (13), destinée à la transmission de données critiques en temps réel, du cycle de transmission (12).

31. Système selon l'une des revendications 20 à 30,
**caractérisé par le fait que** le système comporte au moins un moyen qui, pour tous les télégrammes de données critiques en temps réel à transmettre, note des instants d'émission et de réception chez l'émetteur et/ou le récepteur avant le début de l'exécution respective de la transmission de données.

32. Système selon l'une des revendications 20 à 31,
**caractérisé par le fait que** le système comporte au moins un moyen qui fait en sorte que chaque télégramme de données critique en temps réel arrive à l'unité de connexion correspondante au plus tard à l'instant de retransmission ou plus tôt.

33. Système selon l'une des revendications 20 à 32,
**caractérisé par le fait que** le système comporte au moins un moyen qui émet ou retransmet les télégrammes de données critiques en temps réel immédiatement, sans intervalle de temps intermédiaire.

34. Système selon l'une des revendications 20 à 33,
**caractérisé par le fait que** le système comporte au moins un moyen qui fait en sorte que des voies de liaison d'un réseau de données commuté qui ne doivent pas être utilisées pour la communication non critique en temps réel soient utilisées lors de la communication critique en temps réel.

35. Système selon l'une des revendications 20 à 34,
**caractérisé par le fait qu'**une unité de connexion est intégrée dans un utilisateur.

36. Système selon l'une des revendications 20 à 35,
**caractérisé par le fait qu'**une unité de connexion comporte deux accès séparés à l'utilisateur respectif, un accès étant prévu pour l'échange de données critiques en temps réel et l'autre accès étant prévu pour l'échange de données non critiques en temps réel.

37. Système selon l'une des revendications 20 à 36,
**caractérisé par le fait que** le système comporte au moins un moyen qui fait en sorte qu'au moins un utilisateur d'un réseau de données commuté puisse effectuer parallèlement dans le même réseau de données commuté une communication critique en temps réel et/ou une communication non critique en temps réel, notamment une communication Internet, la communication non critique en temps réel qui a lieu n'influençant pas la communication critique en temps réel ayant lieu parallèlement.

38. Système selon l'une des revendications 20 à 37,
**caractérisé par le fait que** le système comporte au moins un moyen qui fait en sorte qu'au moins un utilisateur quelconque, notamment un utilisateur ayant la capacité de réaliser une communication ouverte compatible avec internet, avec ou sans unité de connexion associée, puisse être ajouté à un réseau de données commuté.

39. Utilisateur pour un système selon l'une des revendications 20 à 38 et/ou utilisateur avec des moyens pour la mise en oeuvre du procédé selon l'une des revendications 1 à 19.

40. Utilisateur selon la revendication 39,
**caractérisé par le fait que** l'utilisateur est un utilisateur d'un système d'automatisation.

41. Utilisateur selon l'une des revendications 39 ou 40,
**caractérisé par le fait que** l'utilisateur comporte au moins un moyen pour la transmission de données critiques en temps réel et de données non critiques en temps réel, les données étant transmises dans au moins un cycle de transmission (12) ayant une durée réglable (17) et chaque cycle de transmission (12) étant divisé en au moins une première plage (13) destinée à la transmission de données critiques en temps réel et au moins une deuxième plage (14) destinée à la transmission de données non critiques en temps réel.
